# EUROPEAN PATENT APPLICATION

(11) **EP 4 538 869 A1**
(43) Date of publication of application: **16.04.2025**
(21) Application number: 23830391.1
(22) Date of filing: 29.06.2023
(51) Int. Cl.: G06F 8/70, G06F 9/445

(54) **APPLICATION MANAGEMENT METHOD AND RELATED DEVICE**

(30) Priority: 30.06.2022 CN 202210772348
(71) Applicant: Beijing Wellintech Co., Ltd., Beijing 100086 (CN)
(72) Inventor: LIN, Wei, Beijing 100086 (CN)
(74) Representative: Murgitroyd & Company
(86) International application number: PCT/CN2023/103730
(87) International publication number: WO 2024/002222

(57) **Abstract**

The present application relates to the technical field of software, and in particular to an application management method and a related device. In the present application, an application store at least comprises a first application and a second application, and the application store can establish an association relationship between the first application and the second application. The second application can call the first application to realize the function of the first application. By means of the present application, collaborative development can be realized among development organizations of different applications, such that the development efficiency is improved, and storage resources of an application store, which are occupied by the applications, are effectively saved.

## Description

This application claims priority to Chinese Patent Application No. 202210772348.7, filed on June 30, 2022, which is incorporated herein by reference in its entirety.

### TECHNICAL FIELD

The present application relates to the field of software technologies, and in particular, to application management methods and related devices.

### BACKGROUND

An application (APP), also referred to as an application program, refers to a computer program designed to accomplish a certain or multiple specific tasks. The application may interact with a user when operating in a user mode, and may have a visual user interface.

Currently, a developer of an application may upload the developed application to an application store, and a user who needs to use the APP may download the application from the application store.

However, at present, different applications operate independently, making it inconvenient for developers of different applications to collaborate. For example, it is difficult for different development organizations to develop applications collaboratively, so that developing applications collaboratively is very difficult and inefficient.

### SUMMARY

The present application provides application management methods and related devices, which may enable collaborative development between development organizations of different applications, thereby improving development efficiency.

The technical solutions of the present application are as follows.

In a first aspect, the present application provides an application management method, which is applied to an application store, and the application store includes at least a first application and a second application. The method includes: establishing an association relationship between the first application and the second application, the second application being capable of calling the first application to implement a function of the first application.

In some implementations, the second application includes first information, and the first information is used for indicating the first application associated with the second application.

In some implementations, the first information includes an identifier of the first application; and identifiers of different applications in the application store are different.

Optionally, copyright owners of the first application and the second application are the same or different.

Optionally, developers of the first application and the second application are the same or different.

In a second aspect, the present application provides an application management apparatus, which is applied to an application store, and the application store includes at least a first application and a second application. The apparatus may be used for the application store to implement the application management method according to the first aspect and any one of the possible implementations of the first aspect. A function of the apparatus may be implemented by a hardware, or by a hardware executing corresponding software. The hardware or software includes one or more modules or units corresponding to the steps of the application management method described in the first aspect and any one of the possible implementations of the first aspect.

For example, the apparatus includes an application management module used to establish an association relationship between the first application and the second application, where the second application is capable of calling the first application to implement a function of the first application.

In some implementations, the second application includes first information, and the first information is used for indicating the first application associated with the second application.

In some implementations, the first information includes an identifier of the first application, and identifiers of different applications in the application store are different.

Optionally, copyright owners of the first application and the second application are the same or different.

Optionally, developers of the first application and the second application are the same or different.

In a third aspect, the present application provides an electronic device. For example, the electronic device may be a hardware device corresponding to the application store described in the above first aspect. The electronic device includes a processor and a memory for storing instructions executable by the processor, where the processor is configured to, when executing the instructions, cause the electronic device to implement the method according to the first aspect and any one of the possible implementations of the first aspect.

In a fourth aspect, the present application provides a computer-readable storage medium having computer program instructions stored therein, where the computer program instructions, when executed by an electronic device, cause the electronic device to implement the method according to the first aspect and any one of the possible implementations of the first aspect.

In a fifth aspect, the present application provides a computer program product, including a computer-readable code, or a non-volatile computer-readable storage medium carrying a computer-readable code, where when the computer-readable code operates in an electronic device, a processor in the electronic device implements the method according to the first aspect and any one of the possible implementations of the first aspect.

In a sixth aspect, the present application provides an application management method, and the method includes: obtaining a first application from an application store; generating a second application according to the first application, where the second application has an association relationship with the first application and is capable of calling the first application to implement a function of the first application; and uploading the second application to the application store.

In some implementations, the second application includes first information, and the first information is used for indicating the first application associated with the second application.

In some implementations, the first information includes an identifier of the first application.

Optionally, copyright owners of the first application and the second application are the same or different.

Optionally, developers of the first application and the second application are the same or different.

In a seventh aspect, the present application provides an application management apparatus, and the apparatus may be used to implement the application management method according to the sixth aspect and any one of the possible implementations of the sixth aspect. A function of the apparatus may be implemented by a hardware, or by a hardware executing corresponding software. The hardware or software includes one or more modules or units corresponding to the steps of the application management method described in the sixth aspect and any one of the possible implementations of the sixth aspect.

For example, the apparatus includes: an acquisition module used to obtain a first application from an application store; a generation module used to generate a second application according to the first application, where the second application has an association relationship with the first application and is capable of calling the first application to implement a function of the first application; and an upload module used to upload the second application to the application store.

In some implementations, the second application includes first information, and the first information is used for indicating the first application associated with the second application.

In some implementations, the first information includes an identifier of the first application.

Optionally, copyright owners of the first application and the second application are the same or different.

Optionally, developers of the first application and the second application are the same or different.

In an eighth aspect, the present application provides an electronic device, including a processor, and a memory used to store instructions that are executable by the processor, where the processor is configured to, when executing the instructions, cause the electronic device to implement the method according to the sixth aspect and any one of the possible implementations of the sixth aspect.

In a ninth aspect, the present application provides a computer-readable storage medium having computer program instructions stored therein, where the computer program instructions, when executed by an electronic device, cause the electronic device to implement the method according to the sixth aspect and any one of the possible implementations of the sixth aspect.

In a tenth aspect, the present application provides a computer program product, including a computer-readable code, or a non-volatile computer-readable storage medium carrying a computer-readable code, where when the computer-readable code operates in an electronic device, a processor in the electronic device implements the method according to the sixth aspect and any one of the possible implementations of the sixth aspect.

In an eleventh aspect, the present application provides an application management method, and the method includes: receiving a first download request, the first download request being used for requesting to download a second application in an application store, where the second application has an association relationship with a first application in the application store and is capable of calling the first application to implement a function of the first application; and sending the second application and the first application in response to the first download request.

In some implementations, the second application includes first information, and the first information is used for indicating the first application associated with the second application.

In some implementations, the first information includes an identifier of the first application, and identifiers of different applications in the application store are different.

Optionally, the method further includes: receiving a second download request, the second download request being used for requesting to download the first application in the application store; and sending the first application in response to the second download request, where the first application is used for generating the second application.

Optionally, the method further includes: receiving the second application that is uploaded to the application store, where the second application is generated according to the first application downloaded from the application store.

In a twelfth aspect, the present application provides an application management apparatus, and the apparatus may be used to implement the application management method according to the eleventh aspect and any one of the possible implementations of the eleventh aspect. A function of the apparatus may be implemented by a hardware, or by a hardware executing corresponding software. The hardware or software includes one or more modules or units corresponding to the steps of the application management method described in the eleventh aspect and any one of the possible implementations of the eleventh aspect.

For example, the apparatus includes: a receiving module used to receive a first download request, the first download request being used for requesting to download a second application in an application store, where the second application has an association relationship with the first application in the application store and is capable of calling the first application to implement a function of the first application; and a sending module used to send the second application and the first application in response to the first download request.

In some implementations, the second application includes first information, and the first information is used for indicating the first application associated with the second application.

In some implementations, the first information includes an identifier of the first application, and identifiers of different applications in the application store are different.

Optionally, the receiving module is further used to receive a second download request, and the second download request is used for requesting to download the first application in the application store. The sending module is further used to send the first application in response to the second download request, where the first application is used for generating the second application.

Optionally, the receiving module is further used to receive the second application that is uploaded to the application store, and the second application is generated according to the first application downloaded from the application store.

In a thirteenth aspect, the present application provides an electronic device, including a processor and a memory used to store instructions that are executable by the processor, where the processor is configured to, when executing the instructions, cause the electronic device to implement the method according to the eleventh aspect and any one of the possible implementations of the eleventh aspect.

In a fourteenth aspect, the present application provides a computer-readable storage medium having computer program instructions stored therein, where the computer program instructions, when executed by an electronic device, cause the electronic device to implement the method according to the eleventh aspect and any one of the possible implementations of the eleventh aspect.

In a fifteenth aspect, the present application provides a computer program product, including a computer-readable code, or a non-volatile computer-readable storage medium carrying a computer-readable code, where when the computer-readable code operates in an electronic device, a processor in the electronic device implements the method according to the eleventh aspect and any one of the possible implementations of the eleventh aspect.

In a sixteenth aspect, the present application provides an application management method, which may be applied to a user device. The method includes: sending a first download request, the first download request being used for requesting to download a second application in an application store, where the second application has an association relationship with a first application in the application store and is capable of calling the first application to implement a function of the first application; and receiving the second application and the first application.

In some implementations, the second application includes first information, and the first information is used for indicating the first application associated with the second application.

In some implementations, the first information includes an identifier of the first application.

Optionally, copyright owners of the first application and the second application are the same or different.

Optionally, developers of the first application and the second application are the same or different.

In the seventeenth aspect, the present application provides an application management apparatus, which may be used to implement the application management method according to the sixteenth aspect and any one of the possible implementations of the sixteenth aspect. A function of the apparatus may be implemented by a hardware, or by a hardware executing corresponding software. The hardware or software includes one or more modules or units corresponding to the steps of the application management method described in the sixteenth aspect and any one of the possible implementations of the sixteenth aspect.

For example, the apparatus includes: a sending module used to send a first download request, the first download request being used for requesting to download a second application in an application store, where the second application has an association relationship with a first application in an application store and is capable of calling the first application to implement a function of the first application; and a receiving module used to receive the second application and the first application.

In some implementations, the second application includes first information, and the first information is used for indicating the first application associated with the second application.

In some implementations, the first information includes an identifier of the first application.

Optionally, copyright owners of the first application and the second application are the same or different.

Optionally, developers of the first application and the second application are the same or different.

In an eighteenth aspect, the present application provides an electronic device, including: a processor, and a memory used to store instructions that are executable by the processor, where the processor is configured to, when executing the instructions, cause the electronic device to implement the method according to the sixteenth aspect and any one of the possible implementations of the sixteenth aspect.

In a nineteenth aspect, the present application provides a computer-readable storage medium having computer program instructions stored therein, where the computer program instructions, when executed by an electronic device, cause the electronic device to implement the method according to the sixteenth aspect and any one of the possible implementations of the sixteenth aspect.

In a twentieth aspect, the present application provides a computer program product, including a computer-readable code, or a non-volatile computer-readable storage medium carrying a computer-readable code, where when the computer-readable code operates in an electronic device, a processor in the electronic device implements the method according to the sixteenth aspect and any one of the possible implementations of the sixteenth aspect.

Based on any one of the first to twentieth aspects described above, the present application has at least the following beneficial effects.

In the present application, the second application having an association relationship with the first application in the application store, and being capable of calling the first application to implement the function of the first application may enable the second application and the first application to be stored separately and independently. This separate and independent storage relationship may effectively save storage resources of the application store occupied by the applications. In addition, the second application having an association relationship with the first application in the application store, and being capable of calling the first application to implement the function of the first application may also enable collaborative development between development organizations of different applications, thereby improving development efficiency.

It should be understood that the above general description and the detailed description in the following are only illustrative and explanatory, and cannot limit the present application.

### BRIEF DESCRIPTION OF THE DRAWINGS

The accompanying drawings herein, which are incorporated in and constitute a part of the specification, illustrate embodiments consistent with the present application and together with the description, serve to explain the principles of the present application, without unduly limiting the present application.
FIG. 1 is a flow diagram of an application management method provided by embodiments of the present application;
FIG. 2 is a flow diagram of another application management method provided by embodiments of the present application;
FIG. 3 is a schematic diagram showing a relationship between a model and predefinition provided by embodiments of the present application;
FIG. 4 is a schematic diagram of data models provided by embodiments of the present application;
FIG. 5 is a schematic diagram showing composition of an APP model of a second application provided by embodiments of the present application;
FIG. 6 is a flow diagram of yet another application management method provided by embodiments of the present application;
FIG. 7 is a flow diagram of yet another application management method provided by embodiments of the present application;
FIG. 8 is a schematic diagram showing composition of an application management system provided by embodiments of the present application;
FIG. 9 is a schematic structural diagram of an application management apparatus provided by embodiments of the present application;
FIG. 10 is a schematic structural diagram of another application management apparatus provided by embodiments of the present application;
FIG. 11 is a schematic structural diagram of yet another application management apparatus provided by embodiments of the present application; and
FIG. 12 is a schematic structural diagram of yet another application management apparatus provided by embodiments of the present application.

### DETAILED DESCRIPTION

In order to make those skilled in the art better understand technical solutions of the present application, the technical solutions in embodiments of the present application will be described clearly and completely below with reference to the accompanying drawings.

It will be noted that terms such as "first" and "second" in the description and claims and the drawings of the present application are used for distinguishing between similar objects, but not necessarily used for describing a particular sequence or precedence order. It should be understood that data used in this way are interchangeable where appropriate such that the embodiments of the present application described herein can be implemented in other orders than those illustrated or described herein. The implementations described in the following exemplary embodiments do not represent all implementations consistent with the present application. Rather, they are merely examples of apparatus and methods consistent with some aspects of the present application as described in the appended claims.

It should also be understood that the term "comprise" indicates the presence of described features, integers, steps, operations, elements and/or components, but does not exclude the presence or addition of one or more other features, integers, steps, operations, elements and/or components.

"And/or" is used to describe an association relationship for associated objects, which represents that there may be three types of relationships. For example, "A and/or B" may represent three situations: only A, both A and B, or only B. The character "/" generally indicates an "or" relationship between the associated objects.

An application (APP), also referred to as an application program, refers to a computer program designed to accomplish a certain or multiple specific tasks. The application may interact with a user when operating in a user mode, and may have a visual user interface.

Currently, a developer of an application may upload the developed application to an application store, and a user who needs to use the APP may download the application from the application store. The application store may be implemented on a hardware device such as a server or a computer, and may provide the user with an interactive application store interface for the user to download a required application.

For example, in industry related scenarios, an industrial Internet platform, which is the application store, may be built based on hardware devices such as servers, computers. A developer of an application may upload the developed application to the industrial Internet platform, and users who need to use the application may download and use the application from the industrial Internet platform.

However, at present, different applications operate independently, making it inconvenient for developers of different applications to collaborate. For example, it is difficult for different development organizations to develop applications collaboratively, so that developing applications collaboratively is very difficult and inefficient.

In addition, in an existing application store, numerous applications may occupy a large amount of storage resources.

On this basis, embodiments of the present application provide an application management method, which may be applied to an application store. By using this method, collaborative development may be achieved among development organizations of different applications, thereby improving development efficiency, and effectively saving storage resources of the application store occupied by the applications.

For example, the method may be specifically implemented on a hardware device corresponding to the application store, and the hardware device may include, for example, a server, a computer, etc. The server may be a single server, or a server cluster composed of multiple servers. In some implementations, the server cluster may also be a distributed cluster. A specific implementation of the hardware device corresponding to the application store is not limited in the present application. It will be noted that the steps implemented at the application store side involved in the embodiments of the present application may all be implemented by the hardware device corresponding to the application store.

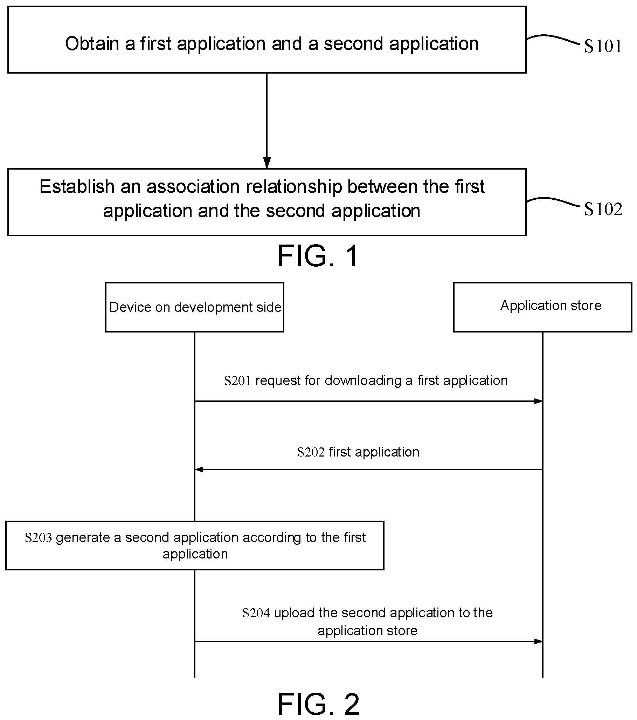

FIG. 1 is a flow diagram of an application management method provided in embodiments of the present application. As shown in FIG. 1, the application management method may include the following steps.

In S101, a first application and a second application are obtained.

Optionally, an application store may include at least the first application and the second application. The first application and the second application may have been uploaded to the application store by their respective developers or copyright owners.

In S102, an association relationship between the first application and the second application is established.

Here, the second application is capable of calling the first application to implement a function of the first application.

For example, the function that may be implemented by the first application is a first function, and the second application may implement the first function by calling the first application without including a code for implementing the first function.

By establishing the association relationship between the first application and the second application, when the second application is downloaded, the application store may send the second application together with the first application. For example, a request for downloading the second application may be sent by a user to the application store using a user device (e.g., a mobile phone, a computer). The application store may send the second application to the user device in response to the request, and since the association relationship has been established between the second application and the first application, the application store may also send the first application to the user device based on the association relationship. When the user device operates the downloaded second application, the second application may call the downloaded first application to implement the function of the first application.

In the present application, the first application may be considered as a sub-application of the second application, but a code of the first application is independent of the second application. That is, in the application store, the second application and the first application are stored separately and independently. This separate and independent storage relationship may effectively save storage resources of the application store occupied by the applications.

For example, assuming that there are two development organizations, such as development organization 1 and development organization 2, where development organization 1 wants to develop an application that is capable of implementing function 1 and function 2, and development organization 2 wants to develop an application that is capable of implementing the function 2. Currently, development organization 1 needs to develop an independent application 1 to implement the function 1 and the function 2, and uploads the application 1 to an application store; and development organization 2 needs to develop an independent application 2 to implement the function 2, and uploads the application 2 to the application store. In this case, storage resources of the application store occupied by the application 1 and the application 2 include at least: resources occupied by a code in the application 1 for implementing the function 1, resources occupied by a code in the application 1 for implementing the function 2, and resources occupied by a code in the application 2 for implementing the function 2.

However, in the application management method provided in the embodiments of the present application, the application 2 may be equivalent to the first application, implementing the function 2; the application 1 may be equivalent to the second application, implementing the function 1; and the application 1 may call the application 2 to implement the function 2. For example, the application 2 may provide an interface capable of calling the application 1. In this case, storage resources of the application store occupied by the application 1 and the application 2 include: resources occupied by the code in the application 1 for implementing the function 1, and resources occupied by the code in the application 2 for implementing the function 2. Compared to the existing method, the application 1 calling the application 2 to implement the function 2 saves the resources occupied by the code in the application 1 for implementing the function 2.

It may be understood that in a case where there are a plurality of second applications, for example, the application store further includes application 3 that is capable of calling the application 2 to implement the function 2, the effect for saving storage resources of the application store occupied by the applications is more significant.

Although in the present application the second application and the first application are stored separately in order to save the storage resources, since the association relationship is established between the second application and the first application, and when the second application is downloaded, the application store may send the second application together with the first application, a normal use of the applications at the user device side may not be affected.

In addition, the application management method provided by the embodiments of the present application may also enable collaborative development between development organizations of different applications, thereby improving development efficiency. For example, in the same example where the development organization 1 develops an application that is capable of implementing the function 1 and the function 2, and the development organization 2 develops an application that is capable of implementing the function 2, the development organization 2 may develop the application 2 that is capable of implementing the function 2, and the development organization 1 may develop application 1 that is capable of implementing the function 1 and calling the application 2, so that collaborative development is achieved between the development organization 1 and the development organization 2, and development efficiency of the development organization 1 may be higher. For example, the development organization 2 may upload the application 2 to the application store, and the development organization 1 may download the application 2 from the application store and develop the application 1 according to the application 2. For example, a related interface capable of calling the application 2 may be implemented in the application 1 according to the application 2.

Implementations for establishing the association relationship between the first application and the second application are illustrated below by way of example.

In some implementations, the second application may include first information, and the first information is used for indicating the first application associated with the second application. Establishing, by the application store, the association relationship between the first application and the second application may include: establishing the association relationship between the first application and the second application based on the first information included in the second application; or using the first information included in the second application as the association relationship between the first application and the second application.

Optionally, when developing the second application, a developer of the second application may add an identifier of the first application to the second application, or add some fields that can indicate the first application to the second application. The identifier of the first application or the fields that can indicate the first application is/are the first information. That is, the first information may include the identifier of the first application or some fields that can indicate the first application.

For example, after the second application is uploaded to the application store, the application store side may maintain an association table between the second application and the first application according to the identifier of the first application or the fields that can indicate the first application included in the second application, thereby establishing the association relationship between the first application and the second application. For example, the association table may include an identifier of the second application, and the identifier of the first application or the fields that can indicate the first application, which correspond(s) to the identifier of the second application. When the second application is downloaded, the application store may determine which application is the first application by querying the association relationship between the first application and the second application (e.g., the association table), and send the second application together with the first application.

For another example, after the second application is uploaded to the application store, the application store side may directly use the identifier of the first application or the fields that can indicate the first application included in the second application as the association relationship between the first application and the second application. When the second application is downloaded, the application store may determine which application is the first application by querying the identifier of the first application or the fields that can indicate the first application included in the second application, and send the second application together with the first application.

In the present application, identifiers of different applications in the application store are different. That is, different applications in the application store have unique identifiers.

Based on the above-described embodiments, embodiments of the present application further provide an application management method, which may be used to develop and generate the second application that has an association relationship with the first application. In one implementation, the first application and the second application have a same developer, and the developer may develop the first application locally, generate the second application according to the first application, and then upload the first application and the second application to the application store. In another implementation, developers of the first application and the second application are different; the application store may include the first application; and a developer may obtain the first application from the application store, generate the second application according to the first application, and then upload the second application to the application store. The way in which the first application is obtained from the application store by the developer and the second application is developed and generated according to the first application is illustrated below by way of example.

FIG. 2 is a flow diagram of another application management method provided by embodiments of the present application. As shown in FIG. 2, the application management method includes the following steps.

In S201, a device on a development side sends a request for downloading a first application to an application store.

Here, the device on the development side may include a server, a computer, etc., used by the developer.

In S202, the application store sends the first application to the device on the development side in response to the request for downloading the first application.

For example, the request for downloading the first application may include an identifier of the first application, and the application store may find the stored first application based on the identifier of the first application and send it to the device on the development side.

Through the S201 to S202, the device on the development side may obtain the first application from the application store.

In S203, a second application is generated according to the first application.

Here, the second application has an association relationship with the first application and is capable of calling the first application to implement a function of the first application.

For example, the second application may be developed by a developer, where an interface that can call the first application may be added to the second application, so that the second application is capable of calling the first application to implement the function of the first application.

In S204, the device on the development side uploads the second application to the application store.

Optionally, in embodiments of the present application, copyright owners of the first application and the second application may be the same or different, and developers of the first application and the second application may also be the same or different.

For example, the developer of the first application is development organization 1, and the developer of the second application is development organization 2, but the copyright owners of the first application and the second application are both company A. Or, the developer of the first application is development organization 1 and the copyright owner of the first application is company A; and the developer of the second application is development organization 2 and the copyright owner of the second application is company B. Or, the copyright owner of the first application is company A, and the copyright owner of the second application is company B, but the developers of the first application and the second application are both development organization 1.

Optionally, in embodiments of the present application, the first application and the second application may be uploaded to the application store by their respective copyright owners, or may be uploaded to the application store by their respective developers, which is not limited herein. For example, in the S204, the second application may also be uploaded to the application store by a device on a copyright owner side of the second application.

Optionally, the application store may include information about a developer and a copyright owner of each application, such as a team name of the developer, a company name of the copyright owner, an address of the copyright owner.

A specific implementation method for generating the second application according to the first application in S203 is illustrated below by way of example.

For example, a process for generating the second application according to the first application may be as follows.
1) An APP model of the second application is created, and a unique identifier (e.g., a globally unique identifier) is assigned to the APP model of the second application. For example, the APP model of the second application may be created by the developer of the second application in a development studio.
2) A data model that the APP model of the second application depends on is defined, data predefinition of the data model that the APP model of the second application depends on (referred to as the data predefinition of the second application) is published to a system warehouse of the second application, and a unique identifier (e.g., a globally unique identifier) is assigned to the data predefinition of the second application. Here the system warehouse of the second application is a system warehouse used by a developer who develops the second application, and the system warehouse of the second application and the development studio of the developer of the second application may be connected through network.

The concepts of the model and the predefinition are mentioned in the present application, where a model is information that describes a structure of an object when the object is abstracted at modeling, and predefinition is information about a model with a determined structure and that information is configured with parameters. The predefinition records the information about the model and is used to instantiate an object. Instantiating the object means building a structure of the object according to a structure of the model of the object and using parameter values as initial values of the object. The predefinition may also be referenced as a sub-predefinition by other models.

For example, operations for creating the data model may include: creating a new model, and assigning a name and an identifier; adding members, and specifying types for the members; deleting members; adding or deleting sub-predefinition; setting initial values for the sub-predefinition; updating a model version; and publishing a model version to generate predefinition, etc. Operations for creating predefinition may include: specifying a model version to publish (create) the predefinition; assigning a name and an identifier; and setting parameter values (attributes and members) for the predefinition, etc.

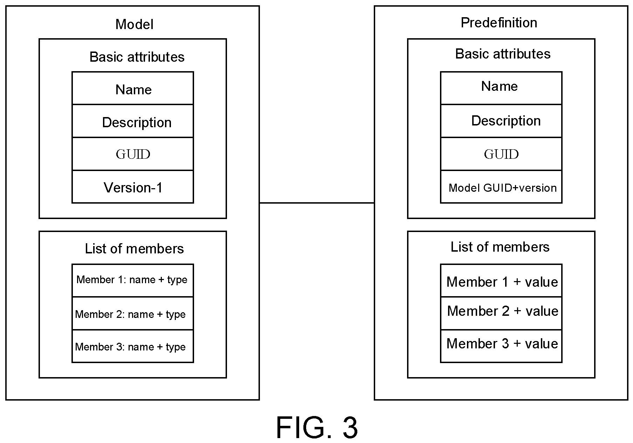

FIG. 3 is a schematic diagram showing a relationship between a model and predefinition provided by embodiments of the present application.

As shown in FIG. 3, the model may include basic attributes and a list of members. The basic attributes may include name, description, globally unique identifier (GUID), version and other information. The list of members may include: "member 1: name + type", "member 2: name + type", "member 3: name + type" and other information.

The predefinition may include basic attributes and a list of members. The basic attributes may include name, description, GUID, model GUID + version and other information. The list of members may include: "member 1 + value", "member 2 + value", "member 3 + value" and other information.

The data model described in step 2) is a concept in a spatiotemporal database, which describes a structure of a data object in the spatiotemporal library and is abstract description of an objective world object.

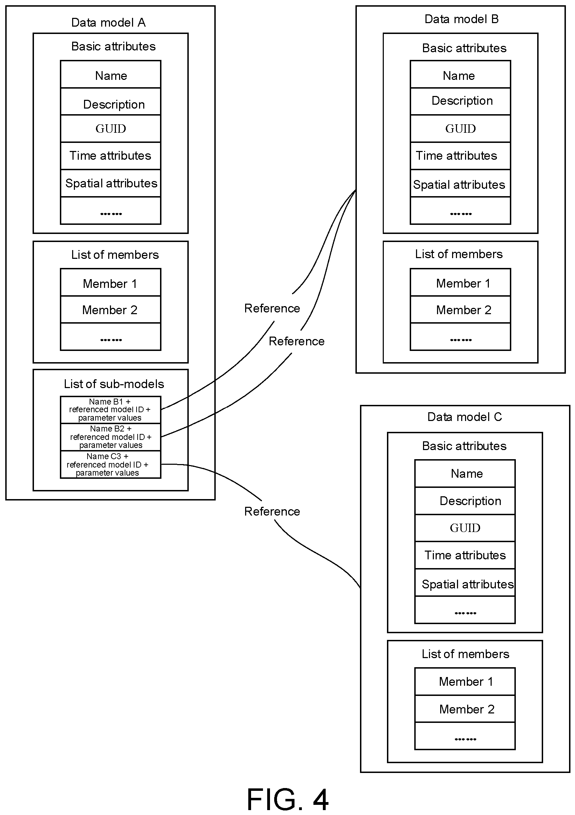

For example, FIG. 4 is a schematic diagram of data models provided by embodiments of the present application. As shown in FIG. 4, a data model may include: basic attributes, a list of members, and a list of sub-models. A data model with sub-models is a composite data model. For example, data model A in the figure is a composite data model, and data model B and data model C are sub-models of the data model A.

In the data model, the basic attributes describe inherent attributes of the data, including name, description, GUID, time attributes (e.g., accuracy), spatial attributes (e.g., coordinate system, geometric shape); and the list of members describes freely defined fields, and each member (e.g., member 1, member 2) describes its field name and data type. The list of sub-models records identifiers of data predefinition of data models referenced as the sub-models, and establishes dependency relationships between the sub-models and the data model. For example, a list of sub-models of the data model A includes identifiers of data predefinition of data model B and data model C, such as "name B1 + referenced model ID + parameter values", "name B2 + referenced model ID + parameter values", and "name C3 + referenced model ID + parameter values".

For example, a motor device has parameters such as speed, temperature, and current. A data model is established for the motor device, and the data model of the motor device may include members of speed, temperature, and current. Motors of the same type may be described uniformly through the data model of the motor device.

For another example, assuming that there are fixed disk production line, stationary disk production line, and assembly production line in a compressor workshop. A data model is established for the compressor workshop, and the data model of the compressor workshop may include sub-models of the fixed disk production line, the stationary disk production line, and the assembly production line, etc. The data model of the compressor workshop may describe models of compressor workshops of the same type.

3) A resource object that the APP model of the second application depends on (referred to as the resource object of the second application) is defined to a repository, and a unique identifier (e.g., a globally unique identifier) is assigned to the resource object of the second application.

Here, the resource object is a concept in the spatiotemporal database. Binary file data is objectified to be organized and managed, and an identifier is assigned to each resource object, so the APP model of the second application is capable of accessing data of the resource object through the identifier of the resource object.

For example, an icon is defined as a resource object to form a dependency relationship with the APP model of the second application, and the APP model of the second application may use this icon. For another example, a video file is defined as a resource object to form a dependency relationship with the APP model of the second application, and the APP model of the second application may read the video file through the dependency relationship for playback.

4) A list of dependent data predefinition of the second application is established on the APP model of the second application, the data predefinition of the second application is selected from the system warehouse of the second application, and the identifier of the data predefinition of the second application is recorded on the list of dependent data predefinition of the second application. Here, data predefinition in the system warehouse of the second application may be built by the developer himself or purchased from the application store.

5) A list of dependent resources of the second application is established on the APP model of the second application, the resource object of the second application is selected from the repository, and the identifier of the resource object of the second application is recorded on the list of dependent resources of the second application. Here, resource objects in the repository may be built by the developer himself or purchased from the application store.

6) A list of sub-APPs of the APP model of the second application is added, predefinition of the first application which is as a sub-APP is selected from the system warehouse of the second application, and an identifier of the predefinition of the first application is recorded on the list of sub-APPs of the APP model of the second application. The predefinition of the first application is the first application obtained from the application store in S201 to S202. The identifier of the predefinition of the first application is the identifier of the first application described in the above embodiments. The predefinition of the first application may be uploaded to the application store by the copyright owner or developer of the first application.

7) Program logics of functional functions of the APP model of the second application are written.

8) Predefinition of the APP model of the second application (referred to as the predefinition of the second application) is published to the system warehouse of the second application, and a unique identifier (e.g., a globally unique identifier) is assigned to the predefinition of the second application. The identifier of the predefinition of the second application is an identifier of the second application.

Here, when the predefinition of the second application is published, parameter values (e.g., attributes and members) of the predefinition may also be set.

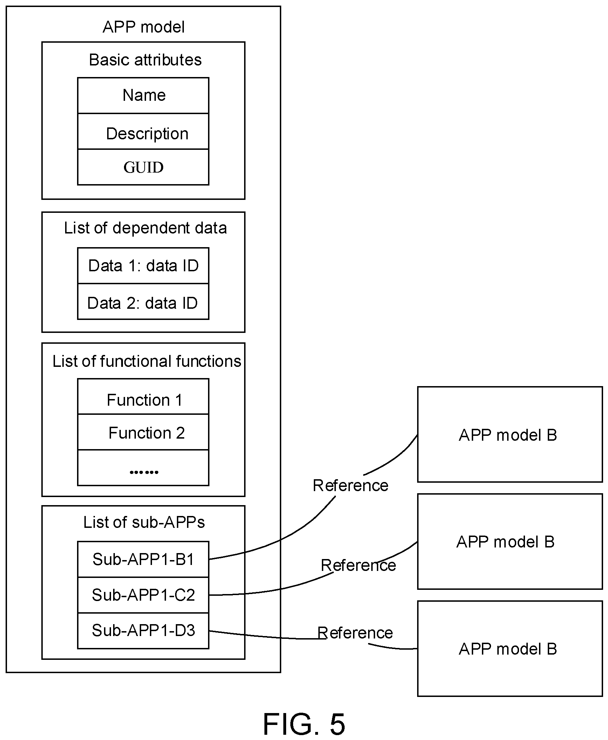

For example, FIG. 5 is a schematic diagram showing composition of an APP model of a second application provided by embodiments of the present application.

As shown in FIG. 5, the APP model of the second application may include: basic attributes, a list of dependent data, a list of functional functions, and a list of sub-APPs.

The basic attributes may include: name, description, and GUID (i.e. the unique identifier of the APP model of the second application).

The list of dependent data records data models or resource objects that the APP model of the second application needs to use, and establishes relationships between the APP model of the second application and dependent data models or between the APP model of the second application and the resource objects. For example, "data 1: data ID", "data 2: data ID", etc., represent identifiers of data predefinition of the dependent data models or identifiers of resource objects. The list of dependent data may include the above-described list of dependent data predefinitions and/or the above-described list of dependent resources.

The list of functional functions may include: function 1, function 2, and other functional functions of the APP model of the second application, and these functional functions are implementations of program logics of the APP model of the second application.

The list of sub-APPs records the information about the first application and establishes an association relationship between the APP model of the second application and the first application. For example, the list of sub-APPs may include identifiers and configuration parameters of first applications such as sub-APP-B1, sub-APP-C2, and sub-APP-D3. That is, APP model B, APP model C, and APP model D, etc., may be the above-described first applications.

Through the process described in the above steps 1) to 8), generating the second application according to the first application in S203 may be realized.

It may be understood that a development process of the first application is similar to the development process of the second application. The difference only lies in that in a case where the first application does not include a sub-APP with a deeper level (i.e. the first application does not call other applications to implement functions of the other applications), and the development process of the first application does not include a process similar to that described in the step 6). In a case where the first application further includes a sub-APP with a deeper level (i.e. the first application calls other applications to implement functions of the other applications), the development process of the first application is consistent with the process described in the steps 1) to 8). The development process of the first application will not be repeated herein.

It will be noted that there may be a case where the second application and the first application depend on same data predefinition or a same resource object, since dependency relationships are established when the second application and the first application are developed separately. That is to say, a list of dependent data of the second application and a list of dependent data of the first application may record an identifier of same data predefinition or a same resource object.

A process of uploading the second application to the application store in S204 is illustrated below by way of example.

For example, an example where the second application is uploaded to the application store by the copyright owner of the second application is considered, and the process of the copyright owner of the second application uploading the second application to the application store is as follows.
1) An APP product of the second application is created by the copyright owner of the second application in the application store, and the APP product of the second application includes an identifier of predefinition of the second application.

Herein, an APP product refers to corresponding information established for predefinition of the APP in the application store, which mainly describes commercialization information of the predefinition of the APP. For example, the APP product of the second application may further include a logo, video, product pricing, product name, product description, etc., of the second application.

2) The application store determines a system warehouse of the second application to which the predefinition of the second application corresponding to the APP product of the second application belongs according to a registered account of the copyright owner of the second application in the application store (or a system product code of the copyright owner of the second application). That is, the application store may determine, according to the registered account of the copyright owner of the second application in the application store, from which system warehouse the predefinition of second application corresponding to the APP product of the second application comes.

3) The application store requests, according to the identifier of the predefinition of the second application included in the APP product of the second application, the system warehouse of the second application to upload the predefinition of the second application.

4) The system warehouse of the second application executes the following steps (4.1) to (4.2) in response to the request for uploading the predefinition of the second application from the application store.

(4.1) The system warehouse of the second application uploads the predefinition of the second application to the application store, where the predefinition of the second application may include an APP model and configuration parameters of the second application.

(4.2) The system warehouse of the second application uploads, according to a list of dependent data predefinition and a list of dependent resources of the second application, data predefinition and resource objects of the second application to the application store.

Through the process described in the above steps 1) to 4), uploading the second application to the application store in S204 may be realized.

It will be noted that in the above step 4), in a case where the second application is also associated with other local sub-APP (a sub-APP not obtained from the application store), the system warehouse of the second application may also upload predefinition of the local sub-APP associated with the second application to the application store, and upload data predefinition and resource objects of the local sub-APP to the application store according to a list of dependent data predefinition and a list of dependent resources of the local sub-APP. For the first application, since data related to the first application, such as the predefinition of the first application, the data predefinition and the resource objects of the first application, already exists in the application store, the system warehouse of the second application does not need to upload the data related to the first application to the application store. Therefore, the application store only includes one copy of data related to the first application, achieving the effect of saving storage resources of the application store as described in the above embodiments.

The above embodiments introduce the application management methods provided in the embodiments of the present application mainly from perspectives of application management by the application store and application development on the development side. As described in the above embodiments, in the present application, when the second application is downloaded, the application store may send the second application together with the first application.

For example, based on a scenario in which the application store receives a request for downloading the second application, and sends the second application together with the first application in response to the request for downloading the second application, embodiments of the present application further provide an application management method that may be applied to the application store side. The method may include: receiving a first download request, the first download request being used for requesting to download a second application in an application store, where the second application has an association relationship with the first application in the application store and is capable of calling the first application to implement a function of the first application; and sending the second application and the first application in response to the first download request.

An application management method is illustrated below by considering an example where a user device sends a first download request to the application store. Here, the user device may be a mobile phone, a computer, etc.

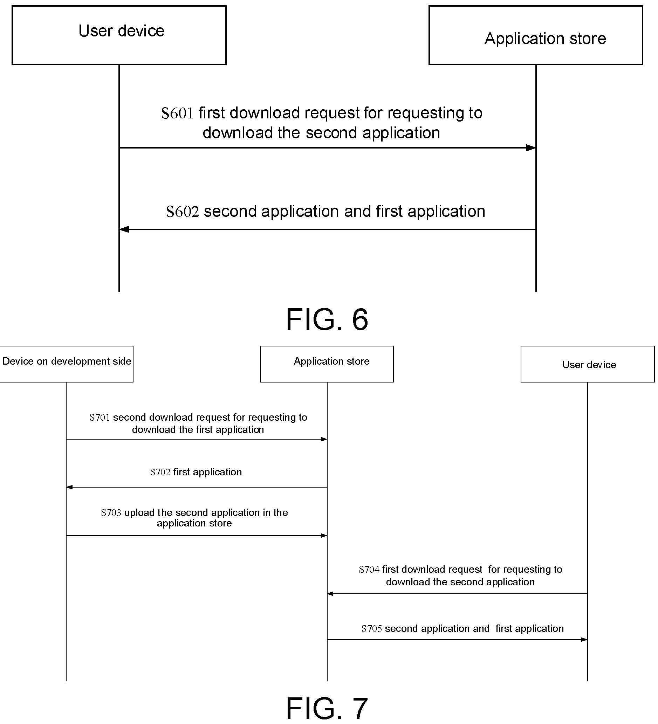

For example, FIG. 6 is a flow diagram of yet another application management method provided by embodiments of the present application. As shown in FIG. 6, the application management method includes the following steps.

In S601, a user device sends a first download request to an application store, where the first download request is used for requesting to download a second application in an application store.

Accordingly, the application store receives the first download request.

In S602, the application store sends the second application and a first application to the user device in response to the first download request.

For example, the first download request may include an identifier of the second application, and the identifier of the second application is used to indicate downloading of the second application. The application store may determine the first application through an association relationship between the second application and the first application, and send the first application together with the second application to the user device. For example, the application store may determine which application is the first application based on an identifier of the first application included in the second application, and send the second application together with the first application.

Optionally, for the scenario described in the above embodiments in which the second application is generated according to the first application obtained from the application store, the application store may also receive a second download request, and the second download request is used for requesting to download the first application in the application store; and the application store may send the first application in response to the second download request, where the first application is used to generate the second application. The application store may further receive the second application that is uploaded to the application store, where the second application is generated according to the first application downloaded from the application store.

For example, an application management method is described by considering an example where a device on a development side of a second application (referred to as the device on the development side) sends a second download request to an application store.

For example, FIG. 7 is a flow diagram of yet another application management method provided by embodiments of the present application. As shown in FIG. 7, the application management method includes the following steps.

In S701, a device on a development side sends a second download request to an application store, where the second download request is used for requesting to download a first application in the application store.

Accordingly, the application store receives the second download request.

In S702, the application store sends the first application to the device on the development side in response to the second download request.

Here, the first application is used to generate a second application.

For example, the device on the development side may generate the second application according to the first application, and a specific process may refer to that described in the above embodiments, which will not be repeated herein.

In S703, the device on the development side uploads the second application to the application store.

The process for uploading the second application in S703 may refer to the description in the above-described embodiments, which will not be repeated herein.

In S704, a user device sends a first download request to the application store, where the first download request is used for requesting to download the second application in the application store.

Accordingly, the application store receives the first download request.

In S705, the application store sends the second application and the first application to the user device in response to the first download request.

S704 to S705 may refer to S601 to S602, which will not be repeated herein.

Optionally, in the present application, the second application may be referred to as a finished product APP, and a sub-APP of the second application (e.g., the first application) may be referred to as a part APP. A finished product APP may be a program that is capable of operating independently. A part APP may be an APP program that is capable of operating independently or a program that does not operate independently. A part APP can serve as a sub-APP of one or more finished product APPs, and be called by the finished product APPs to implement a function of the part APP.

It may be understood that part APP and finished product APP are relative concepts, and any application that serves as a sub-APP may be recognized as a part APP. For example, in a case where there is a third application that may call the second application to implement a function of the second application, the third application is a finished product APP and the second application is a part APP.

An application management method provided by embodiments of the present application will be further illustrated with a specific example.

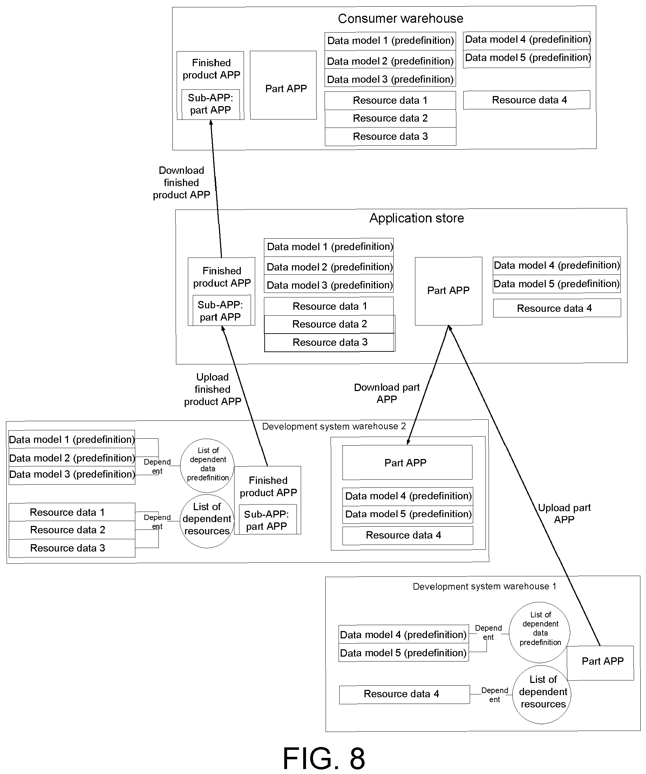

FIG. 8 is a schematic diagram of an application management system provided by embodiments of the present application. As shown in FIG. 8, a development system warehouse 1, a development system warehouse 2, an application store, and a consumer warehouse may constitute the application management system.

The development system warehouse 1 may be a system warehouse for developing a part APP (e.g., the first application described above). A developer of the part APP may complete the development of the part APP in the development system warehouse 1 and upload the part APP to the application store. Here, the part APP may include a list of dependent data predefinition and a list of dependent resources. The list of dependent data predefinition establishes a dependency relationship between the part APP and data model 4 (predefinition) and data model 5 (predefinition). The list of dependent resources establishes a dependency relationship between the part APP and resource data 4.

The development system warehouse 2 may be a system warehouse for developing a finished product APP (e.g., the second application described above). A developer of the finished product APP may download the part APP from the application store to the development system warehouse 2, develop and finish the finished product APP in the development system warehouse 2 according to the part APP, and upload the finished product APP to the application store. Here, the finished product APP may include a list of dependent data predefinition and a list of dependent resources. The list of dependent data predefinition establishes a dependency relationship between the finished product APP and data model 1 (predefinition), data model 2 (predefinition), and data model 3 (predefinition). The list of dependent resources establishes a dependency relationship between the finished product APP and resource data 1, resource data 2, and resource data 3. An association relationship is established between the finished product APP and the part APP, so the part APP can be called to implement a function of the part APP.

The consumer warehouse may be a warehouse on a side of a consumer (user) that consumes and uses the second application. The consumer may use a user device to download the finished product APP from the application store to the consumer warehouse. When the consumer uses the user device to download the finished product APP from the application store, the application store may send the finished product APP together with the part APP to the consumer warehouse.

For example, a process for the consumer downloading the finished product APP from the application store may include the following steps. 1) The user device is used by the consumer to execute, in an interactive interface provided by the application store, an instruction for downloading the finished product APP, and the user device is triggered by the consumer to send a request for downloading the finished product APP to the application store, where the request for downloading the finished product APP may specify a name for the finished product APP (e.g., including an identifier of the finished product APP). 2) The application store sends predefinition of the finished product APP to the consumer warehouse according to the name of the finished product APP specified by the request for downloading the finished product APP. 3) The application store finds data predefinition and resource data that the finished product APP depends on according to a list of dependent data predefinition and a list of dependent resources of the finished product APP, and sends them to the consumer warehouse. 4) The application store sends predefinition of a part APP to the consumer warehouse according to an identifier of the part APP included in the finished product APP (such as querying a list of sub-APPs of the finished product APP). 5) The application store finds data predefinition and resource data that the part APP depends on according to a list of dependent data predefinition and a list of dependent resources of the predefinition of the part APP, and sends them to the consumer warehouse.

Optionally, the above-described development system warehouses (development system warehouse 1 and development system warehouse 2) may be a portion of the APP development system, and the APP development system may further include a developer studio. The developer studio refers to a system where the developer edits APP models, and the developer studio can create, edit, publish and perform other APP model management operations. The development system warehouse is a system that stores APP predefinition published by the APP models developed by the developer.

Optionally, the consumer warehouse may be a portion of a consumer application system, and the consumer application system may further include an APP operating environment and an APP operation and maintenance system. The consumer application system refers to a business application system of an independent manufacturing enterprise. The manufacturing enterprise completes business activities on the system and is responsible for maintaining the business application system. The consumer warehouse is a system that stores APP predefinition purchased by consumers. The APP operation and maintenance system is a system for consumers to operate and maintain APPs. The APP operating environment is an environment system where the APP operates.

After the finished productAPP and the part APP are downloaded to the consumer warehouse, the predefinition of the finished product APP may create an APP operating instance, specify operating environment (computer node), and allocate computer resources (e.g., central processing unit (CPU), memory, network bandwidth). The APP operating instance has an identifier of the predefinition of the APP. The APP operation and maintenance system may deploy functional logic of an APP model of the predefinition of the APP (an identifier of the APP model is carried on the predefinition of the APP) to designated computer nodes according to the identifier of the predefinition of the APP on the APP operating instance. The APP operation and maintenance system, the consumer warehouse, and the APP operating environment complete a deployment process of APP program files through network communication. After the deployment is completed, operating of an APP instance may be initiated to start to execute the functional logic of the APP instance.

Optionally, the application store may include a store system consisting of a store system and a transaction system. The store system may be used as a commodity transaction circulation system operated by an operator of the application store. APP software development enterprises (i.e. developers) and manufacturing enterprises (i.e. consumers) may complete transactions and sharing of APP through the store system. Here, the store system may include one or more stores, which are used to store uploaded APP products, and are responsible for the uploading, downloading and distribution of authorized keys of the APPs, etc. The transaction system may realize functions such as order management and payment management.

In the present application, collaborative development may be achieved between the developer of the finished product APP and the developer of the part APP, and thus development efficiency of the finished product APP can be effectively improved. A part APP can be called by one or more finished product APPs to realize a function of the part APP, so that the part APP may be reused among different development organizations. Through the application store, the part APP can be adopted by more development organizations, value of the part APP is amplified, and value of the developers of the part APP are also amplified, which may enhance enthusiasm of APP developers.

Considering a scenario of industrial APP as an example, through such cooperation mode, many industrial APP developers can cooperate in a labor-sharing manner, and development of complex industrial APPs by a single developer will be transformed into collaborative development by many developers, and thus output efficiency of industrial APPs will be improved.

In addition, the finished productAPP and the part APP are stored separately in the application store, which may ensure that there is no redundant data, and storage resources of the application store occupied by the APPs are saved.

It may be understood that in actual implementation, the application store, device on the development side, user device, etc., described in the embodiments of the present application may contain one or more hardware structures and/or software modules for implementing the above-described corresponding application management methods, and these executing hardware structures and/or software modules may constitute an electronic device. A person skilled in the art will be easy to conceive that algorithm steps of the examples described in combination with the embodiments applied herein may be implemented via a hardware or a combination of a hardware and a computer software in the present application. Whether a certain function is performed via the hardware or the computer software-driven hardware depends on the specific application and restrictive conditions on design of the technical solution. A skilled person may use different methods for each specific application to implement the described functions, but such implementation should not be considered beyond the scope of the present application.

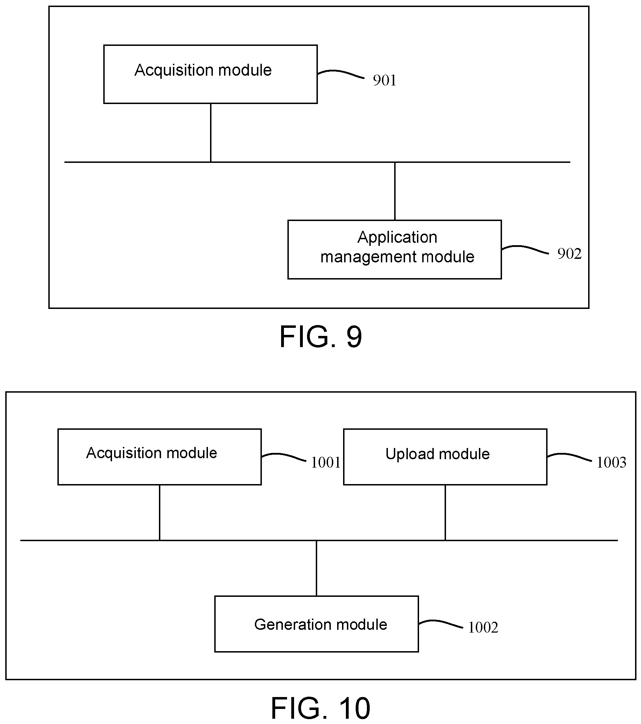

Based on this understanding, a hardware structure and/or software module contained in the application store is considered as an example, and embodiments of the present application further provide an application management apparatus accordingly, which may be applied to the above-described application store (e.g., a hardware device corresponding to the application store). FIG. 9 is a schematic structural diagram of an application management apparatus provided by embodiments of the present application. As shown in FIG. 9, the application management apparatus may include: an acquisition module 901 used to obtain a first application and a second application; and an application management module 902 used to establish an association relationship between the first application and the second application. The second application is capable of calling the first application to implement a function of the first application.

Embodiments of the present application further provide an application management apparatus accordingly, which may be applied to the device on the development side described above. FIG. 10 is a schematic structural diagram of another application management apparatus provided by embodiments of the present application. As shown in FIG. 10, the application management apparatus may include: an acquisition module 1001 used to obtain a first application from an application store; a generation module 1002 used to generate a second application according to the first application, where the second application has an association relationship with the first application and is capable of calling the first application to implement a function of the first application; and an upload module 1003 used to upload the second application to the application store.

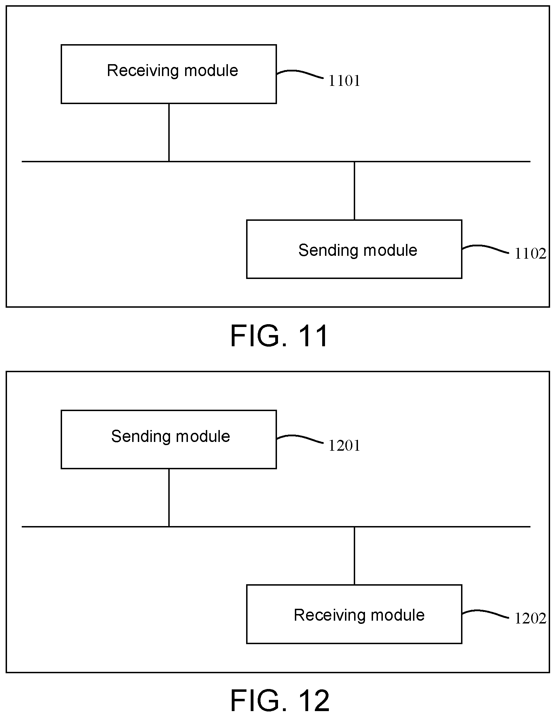

Embodiments of the present application further provide an application management apparatus accordingly, which may be applied to the above-described application store. FIG. 11 is a schematic structural diagram of yet another application management apparatus provided by embodiments of the present application. As shown in FIG. 11, the application management apparatus may include: a receiving module 1101 used to receive a first download request, the first download request being used for requesting to download a second application in an application store, where the second application has an association relationship with the first application in the application store and is capable of calling the first application to implement a function of the first application; and a sending module 1102 used to send the second application and the first application in response to the first download request.

Optionally, the receiving module 1101 is further used to receive a second download request, and the second download request is used for requesting to download of the first application in the application store. The sending module 1102 is further used to send the first application in response to the second download request. Here, the first application is used to generate the second application.

Optionally, the receiving module 1101 is further used to receive the second application that is uploaded to the application store, and the second application is generated according to the first application downloaded from the application store.

Embodiments of the present application further provide an application management apparatus, which may be applied to the above-described user device. FIG. 12 is a schematic structural diagram of yet another application management apparatus provided by embodiments of the present application. As shown in FIG. 12, the application management apparatus may include: a sending module 1201 used to send a first download request, the first download request being used for requesting to download of a second application in an application store, where the second application has an association relationship with the first application in the application store and is capable of calling the first application to implement a function of the first application; and a receiving module 1202 used to receive the second application and the first application.

As described above, the embodiments of the present application may divide function modules of various execution subjects involved in the application management methods according to the above method examples. Herein, the integrated module may be implemented in the form of hardware, or may be implemented in the form of software functional modules. It is also noted that, the division of modules in the embodiments of the present application is schematic, and is only a division according to logical functions, and there may be other division manners in actual implementation. For example, the functional modules may be divided for corresponding various functions, or two or more functions may be integrated into one processing module.

For the application management apparatus in the above-described embodiments, the specific manner of each module executing the operation and the beneficial effects thereof have been described in detail in the above-described method embodiments, which will not be repeated herein.

Embodiments of the present application further provide an electronic device, which may be a hardware device corresponding to an application store, or a device on a development side, or the user device described above. The electronic device includes a processor; and a memory for storing instructions executable by the processor. The processor is configured to, when executing the instructions, cause the electronic device to realize the methods as described in the above-described embodiments.

In an exemplary embodiment, embodiments of the present application further provide a computer-readable storage medium storing computer program instructions therein, where the computer program instructions, when executed by an electronic device, cause the electronic device to implement the methods as described in the above-described embodiments.

Optionally, the computer-readable storage medium may be a non-transitory computer-readable storage medium. For example, the non-transitory computer-readable storage medium may be a ROM, a random access memory (RAM), a CD-ROM, a magnetic tape, a floppy disk, an optical data storage device, and the like.

In an exemplary embodiment, embodiments of the present application further provide a computer program product, including a computer-readable code, or a non-volatile computer-readable storage medium carrying a computer-readable code, where when the computer-readable code operates in an electronic device, a processor in the electronic device implements the methods described in the above-described embodiments.

Those skilled in the art will easily conceive of other implementation in the present application, after considering the specification and practicing the contents applied herein. The present application aims to cover any variations, usage, or adaptive changes in the present application, and these variations, usage, or adaptive changes follow the general principles of the present application and include common knowledge or customary technical means in the art not disclosed in the present application. The specification and the embodiments are only regarded as being exemplary, and a true scope and spirit of the present application are indicated by the following claims.

It should be understood that the present application is not limited to the precise structure described above and shown in the drawings, and various modifications and changes can be made without departing from its scope. The scope of the present application is limited only by the appended claims.

## Claims

1. An application management method, **characterized in that** the method is applied to an application store, the application store comprises at least a first application and a second application, and the method comprises:
establishing an association relationship between the first application and the second application;
the second application being capable of calling the first application to implement a function of the first application.

2. The method according to claim 1, **characterized in that** the second application comprises first information, and the first information is used for indicating the first application associated with the second application.

3. The method according to claim 2, **characterized in that** the first information comprises an identifier of the first application; and
identifiers of different applications in the application store are different.

4. The method according to any of claims 1 to 3, **characterized in that** copyright owners of the first application and the second application are same or different.

5. The method according to any of claims 1 to 3, **characterized in that** developers of the first application and the second application are same or different.

6. An application management method, **characterized in that** the method comprises:
obtaining a first application from an application store;
generating a second application according to the first application, the second application having an association relationship with the first application and being capable of calling the first application to implement a function of the first application; and
uploading the second application to the application store.

7. The method according to claim 6, **characterized in that** the second application comprises first information, and the first information is used for indicating the first application associated with the second application.

8. The method according to claim 7, **characterized in that** the first information comprises an identifier of the first application.

9. The method according to any of claims 6 to 8, **characterized in that** copyright owners of the first application and the second application are same or different.

10. The method according to any of claims 6 to 8, **characterized in that** developers of the first application and the second application are same or different.

11. An application management method, **characterized in that** the method comprises:
receiving a first download request, the first download request being used for requesting to download a second application in an application store, the second application having an association relationship with a first application in the application store and being capable of calling the first application to implement a function of the first application; and
sending the second application and the first application in response to the first download request.

12. The method according to claim 11, **characterized in that** the second application comprises first information, and the first information is used for indicating the first application associated with the second application.

13. The method according to claim 12, **characterized in that** the first information comprises an identifier of the first application; and
identifiers of different applications in the application store are different.

14. The method according to any of claims 11 to 13, **characterized in that** the method further comprises:
receiving a second download request, the second download request being used for requesting to download the first application in the application store; and
sending the first application in response to the second download request, wherein the first application is used for generating the second application.

15. The method according to claim 14, **characterized in that** the method further comprises:
receiving the second application uploaded to the application store, the second application being generated according to the first application downloaded from the application store.

16. An application management apparatus, **characterized in that** the apparatus is applied to an application store, the application store comprises at least a first application and a second application, and the apparatus comprises:
an application management module used to establish an association relationship between the first application and the second application,
the second application being capable of calling the first application to implement a function of the first application.

17. An application management apparatus, **characterized in that** the apparatus comprises:
an acquisition module used to obtain a first application from an application store;
a generation module used to generate a second application according to the first application, the second application having an association relationship with the first application and being capable of calling the first application to implement a function of the first application; and
an upload module used to upload the second application to the application store.

18. An application management apparatus, **characterized in that** the apparatus comprises:
a receiving module used to receive a first download request, the first download request being used for requesting to download a second application in an application store, the second application having an association relationship with a first application in the application store and being capable of calling the first application to implement a function of the first application; and
a sending module used to send the second application and the first application in response to the first download request.

19. An electronic device, **characterized in that** the electronic device comprises: a processor, a memory, and a computer program, wherein the computer program is stored in the memory, and the computer program, when executed by the processor, causes the electronic device to implement the method according to any one of claims 1 to 5, or the method according to any one of claims 6 to 10, or the method according to any one of claims 11 to 15.

20. A computer-readable storage medium comprising a computer program, **characterized in that** the computer program, when operating on an electronic device, causes the electronic device to implement the method according to any one of claims 1 to 5, or the method according to any one of claims 6 to 10, or the method according to any one of claims 11 to 15.

21. A computer program product comprising a computer-readable code, or a non-volatile computer-readable storage medium carrying a computer-readable code, **characterized in that** when the computer-readable code operates in an electronic device, a processor in the electronic device implements the method according to any one of claims 1 to 5, or the method according to any one of claims 6 to 10, or the method according to any one of claims 11 to 15.
